# EUROPEAN PATENT SPECIFICATION

(11) **EP 2 133 601 B1**
(45) Date of publication and mention of the grant of the patent: **22.07.2015**
(21) Application number: 09251487.6
(22) Date of filing: 04.06.2009
(51) Int. Cl.: F16H 63/20, F16H 63/30

(54) **Transmission and manufacturing method thereof**
Getriebe und entsprechendes Herstellungsverfahren
Transmission et son procédé de fabrication

(30) Priority: 09.06.2008 JP 2008150858
(43) Date of publication of application: 16.12.2009
(73) Proprietor: TOYOTA JIDOSHA KABUSHIKI KAISHA, Toyota-shi, Aichi-ken, 471-8571 (JP)
(72) Inventor: Kodera, Hiroaki, Aichi-ken, 471-8571 (JP); Nagai, Kazunari, Aichi-ken, 471-8571 (JP)
(74) Representative: Albutt, Anthony John

(56) References cited:
- JP-A- 9 280 368
- US-A- 5 101 680

## Description

The invention relates to a transmission and a manufacturing method thereof. More particularly, the invention relates to a transmission having a shift select shaft, and an assembly method of that transmission.

Japanese Patent Application Publication No. 2007-132358 (JP-A-2007-132358), for example, describes a manual transmission in which a shift operation and a select operation are input to a shift select shaft via different systems.

However, JP-A-2007-132358 does not describe or suggest anything related to facilitating the manufacture of such a shift select shaft. Other background art is JP-A-9280368 which relates to a method of assembling a striking lever of a transmission.

Document US 5 101 680 A1 is considered being the closest prior art and shows the preamble of claim 1.

When performing a shift operation and a select operation using independent mechanisms, a transmission case must be divided to mount the shift mechanism and the select mechanism in the case. This disclosure relates to a transmission in which these mechanisms are easily assembled into a case, as well as a manufacturing method of that transmission.

Aspects of the invention are defined in the ap.perided claims.

A first example of the disclosure relates to a transmission that includes a case, an input portion which is inserted into the case and performs one of a shift operation or a select operation, and a shift select shaft that engages with the input portion. The input portion has an engaging portion which is capable of engaging with the shift select shaft. The engaging portion and the shift select shaft are arranged in the case such that the engaging portion engages with the shift select shaft by the input portion moving toward the outside of the case from a position in which the engaging portion is not engaged with the shift select shaft.

According to this first example, the engaging portion is able to easily engage with the shift select shaft by the input portion moving toward the outside of the case from a position in which the engaging portion is not engaged with the shift select shaft. As a result, the engaging portion can be engaged with the shift select shaft without dividing the case.

The engaging portion may include an inner lever that engages with the shift select shaft, and the input portion may include a shift outer lever shaft that engages with the inner lever.

A second example of the disclosure relates to a manufacturing method of a transmission. This manufacturing method includes inserting a shift outer lever shaft into a case, engaging an inner lever in the case with the shift outer lever shaft, moving the inner lever to a position where the inner lever will not engage with the shift select shaft, mounting the shift select shaft in the case, and engaging the inner lever with the shift select shaft in the case by moving the shift outer lever shaft toward the outside of the case.

According to this second example, the shift outer lever shaft and the inner lever are temporarily mounted before the shift select shaft is mounted. As a result, members that are necessary when mounting the shift outer lever shaft after the shift select shaft has been mounted can be omitted.

Moreover, the shift outer lever shaft may be positioned with respect to the case after engaging the inner lever with the shift select shaft.

The foregoing and further objects, features and advantages of the disclosure will become apparent from the following description of example embodiments with reference to the accompanying drawings, wherein like numerals are used to represent like elements and wherein:
FIG. 1 is a side sectional view of a portion of a manual transmission according to an example embodiment of the invention;
FIG. 2 is a side sectional view of the portion shown in FIG. 1, which illustrates a first step in a manufacturing method of the manual transmission shown in FIG 1;
FIG 3 is a side sectional view of the portion shown in FIG 1, which illustrates a second step in the manufacturing method of the manual transmission shown in FIG 1; and
FIG 4 is a plan view of an E-ring used in the example embodiment of the invention.

### DETAILED DESCRIPTION OF EMBODIMENTS

Example embodiments of the present invention will be described in greater detail below with reference to the accompanying drawings. In the following description, like or corresponding portions will be denoted by like reference characters and descriptions of those portions will not be repeated.

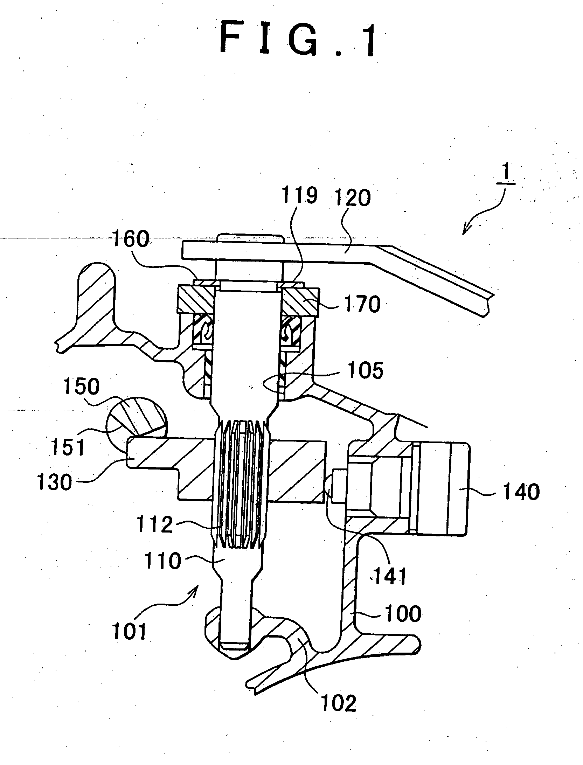

FIG 1 is a side sectional view of a portion of a manual transmission according to an example embodiment of the invention. Referring to FIG 1, the manual transmission 1 has a transmission case 100 to which various elements for shifting are mounted.

A through-hole 105 is formed in the transmission case 100. Also, a support portion 102 for receiving a shift outer lever shaft 110 is formed on the transmission case 100.

The transmission case 100 is hollow and the inside of the transmission case 100 is lubricated with oil. The shift outer lever shaft 110 is arranged in the transmission case 100. One end of the shift outer lever shaft 110 is retained by the support portion 102 and the other end of the shift outer lever shaft 110 protrudes out of the transmission case 100 and is connected to a shift outer lever 120.

Splines 112 are formed on the shift outer lever shaft 110. These splines 112 extend in the length direction of the shift outer lever shaft 110.

An annular groove 119 is formed around the circumference of the shift outer lever shaft 110. An E-ring 160 is fit into this annular groove 119.

The shift outer lever shaft 110 is sealed by a spacer 170. A seal member is provided in the through-hole 105, which prevents oil from leaking out of the transmission case 100.

As described above, the shift outer lever 120 is connected to the shift outer lever shaft 110. When a driver operates a shift lever, that operation is transmitted to the shift outer lever 120. Operation of the shift outer lever 120 causes the shift outer lever shaft 110 to rotate or pivot about its longitudinal axis.

When the driver operates the shift lever, one of two types of operations is performed, i.e., a select operation or a shift operation. Therefore, movement corresponding to either a select operation or a shift operation is transmitted to the shift outer lever 120. Movement in which the shift outer lever shaft 110 rotates may correspond to a shift operation of the manual transmission 1 or a select operation of the manual transmission 1.

Also, the shift outer lever 120 may be moved by an actuator instead of being moved manually by the driver. That is, an actuator may be driven in response to some kind of signal from the driver, to move the shift outer lever 120 so as to perform a shift.

A shift inner lever 130 is engaged with the splines 112 of the shift outer lever shaft 110. The shift inner lever 130 extends in a predetermined direction inside the transmission case 100 (i.e., a direction that crosses the axial direction of the shift outer lever shaft 110, or more specifically, in a direction that is substantially orthogonal to the axial direction of the shift outer lever shaft 110). The rotational direction of the shift outer lever shaft 110 is determined by a lock ball mechanism 140. That is, a ball 141 at the tip end of the lock ball mechanism 140 is urged toward the shift inner lever 130 side by a spring. A plurality of indentations are formed on the shift inner lever 130, and the ball 141 of the lock ball mechanism 140 fits into one of these indentations. The rotational direction of the shift outer lever shaft 110 is determined by the shift inner lever 130 is positioned by the location of the indentation into which the ball 141 is fitted.

Incidentally, in this example the lock ball mechanism 140 is provided, but it does not necessarily have to be provided.

One way to enable the shift outer lever 120 to be moved manually is to have the shift outer lever 120 be connected to one end of a wire or cable which is connected at the other end to the shift lever.

Alternatively, the shift outer lever 120 may be connected to a link mechanism, and the end of this link mechanism may be connected to the shift lever.

The manual transmission is not limited to a floor shift manual transmission in which the shift lever is arranged on the floor. That is, the manual transmission may also be a column shift manual transmission in which the shift lever is arranged near the steering wheel.

The tip end portion of the shift inner lever 130 is engaged with a groove portion 151 of a shift select shaft 150. The shift select shaft 150 extends in a predetermined direction, and the groove portion 151 is formed by a portion of the shift select shaft 150 which has been cut out. The shift select shaft 150 is positioned between the transmission case 100 and the shift inner lever 130 (more specifically, the surface of the shift inner lever 130 that faces the through-hole 105) in the axial direction of the shift outer lever shaft 110 (i.e., in the vertical direction in FIG 1).

Incidentally, in this example embodiment the groove portion 151 is formed on the shift select shaft 150 and the tip end portion of the shift inner lever 130 is engaged with the groove portion 151. However, the invention is not limited to this structure. For example, a protrusion may be formed on the shift select shaft 150 and this protrusion may engage with an indentation formed in the shift inner lever 130.

The shift select shaft 150 moves in both the shift direction and the select direction. Movement of the shift select shaft 150 shown in FIG. 1 in the longitudinal direction may correspond to either a shift operation or a select operation. Also, movement in the direction in which the shift select shaft 150 rotates may correspond to either a shift operation or a select operation.

An inner lever provided on the shift select shaft 150 is able to engage with a shift fork shaft, i.e., a shift rail, of the transmission. The shift rail retains a shift fork that has a sleeve spline. When the shift fork moves in the axial direction, the sleeve spline also moves in the axial direction, such that a shift is performed.

The shift rail may extend parallel to the shift select shaft 150 or orthogonal to the shift select shaft 150.

Furthermore, the transmission is not limited to a constant-mesh transmission. For example, the transmission may also be a selective sliding transmission.

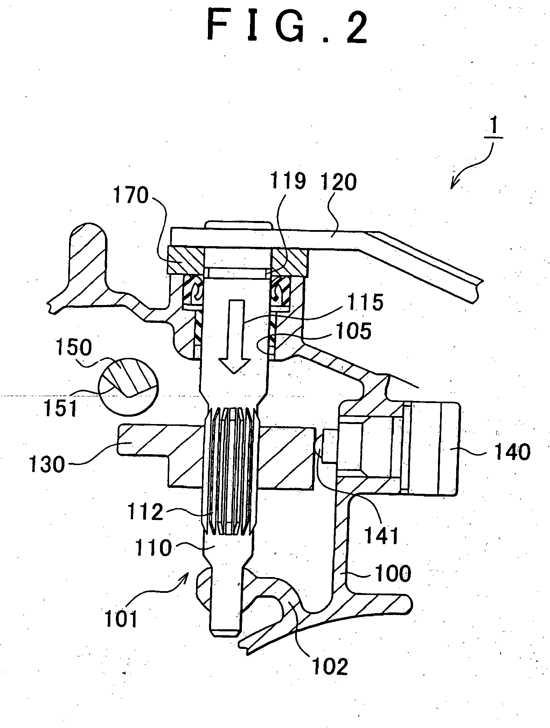

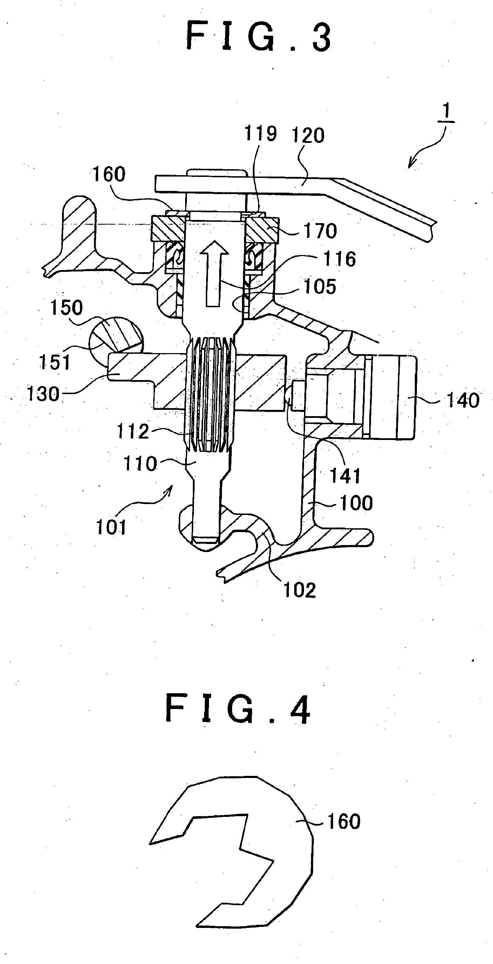

Next, the assembly method of the transmission shown in FIG 1 will be described. FIGS. 2 and 3 are side sectional views of the portion shown in FIG 1, which illustrate a manufacturing method of the manual transmission shown in FIG 1. First, referring to FIG 2, the shift outer lever shaft 110 is inserted into the through-hole 105 in the direction indicated by the arrow 115. At this time, the shift outer lever shaft 110 is inserted until the shift outer lever 120 contacts the spacer 170. The shift inner lever 130 engages with the splines 112 of the shift outer lever shaft 110. Because the splines 112 do not prevent the shift inner lever 130 from moving in the axial direction with respect to the shift outer lever shaft 110, a pin or the like is used to position the shift inner lever 130 with respect to the shift outer lever shaft 110 to restrict the movement of the shift inner lever 130 in the axial direction of the shift outer lever shaft 110. The shift select shaft 150 is not mounted in the transmission case 100 at this time.

Next, the shift select shaft 150 is mounted in the transmission case 100. The shift select shaft 150 is mounted in the transmission case 100 in a position between the shift inner lever 130 and the transmission case 100 in the axial direction of the shift outer lever shaft 110. At this stage, the shift inner lever 130 is not engaged with the groove portion 151 of the shift select shaft 150.

Referring now to FIG 3, the shift outer lever shaft 110 is moved in the direction indicated by the arrow 116. Accordingly, the shift inner lever 130 also moves in the direction indicated by the arrow 116. As a result, the tip end portion of the shift inner lever 130 engages with the groove portion 151 of the shift select shaft 150, thereby completing assembly of the manual transmission 1 as shown in FIG 1.

FIG 4 is a plan view of an E-ring used in this example embodiment of the invention. Referring to FIG 4, when the shift outer lever shaft 110 is lifted up in the direction indicated by the arrow 116 in FIG 3, the annular groove 119 comes out above the spacer 170, at which time the E-ring 160 is fitted into the annular groove 119, thereby fixing the position of the shift outer lever shaft 110 in the axial direction.

In the structure described above, the shift function and the select function are carried out by independent component parts and are combined when these parts are assembled. As a result, the transmission case 100 need only be provided with a hole, and assembly is possible by inserting the shift outer lever shaft 110 into this hole, thereby obviating the need to divide the transmission case 100.

In this example embodiment, the shift outer lever shaft 110 is structured so as to be able to be inserted to a point where the shift inner lever 130 will not engage with the shift select shaft 150. More specifically, the shift outer lever 120 and the transmission case 100, and the shift outer lever shaft 110 and the transmission case 100 are designed so that there is sufficient room to enable the shift outer lever shaft 110 to be inserted beyond the position where the shift inner lever 130 engages with the shift select shaft 150 to a position where the two are not engaged with each other.

The shift outer lever shaft 110 and the shift inner lever 130 may be temporarily mounted in the transmission case 100 before the shift select shaft 150 is mounted in order to place the shift inner lever 130 in a position in the transmission case 100 where it will not engage with the shift select shaft 150 before the shift select shaft 150 is inserted into the transmission case 100. As a result, a cover and a fastening member, which are separately required with a structure in which the shift outer lever shaft 110 and the shift inner lever 130 are mounted after the shift select shaft 150 has been mounted, are able to be omitted.

Accordingly, the number of parts (such as a cover connector and fastening bolts) can be reduced. Also, rattling of the shaft (in the radial and axial directions) can be reduced due to this reduction in the total number of parts, and assembly can be improved.

That is, the transmission according to the example embodiment of this invention includes the transmission case 100, an input portion 101 which is inserted into the transmission case 100 and performs either a shift operation or a select operation, and a shift select shaft 150 that engages with the input portion 101. The input portion 101 includes the shift inner lever 130 that serves as an engaging portion capable of engaging with the shift select shaft 150. The shift inner lever 130 and the shift select shaft 150 are arranged in the transmission case 100 such that the shift inner lever 130 engages with the shift select shaft 150 as a result of the input portion 101 moving from the position shown in FIG 2, in which the shift inner lever 130 is not engaged with the shift select shaft 150, toward the outside of the transmission case 100.

The input portion 101 also includes the shift outer lever shaft 110 that engages with the shift inner lever 130.

The manufacturing method of the transmission according to this example embodiment of the invention includes the steps of i) inserting the shift outer lever shaft 110 into the transmission case 100, ii) engaging the shift inner lever 130 which is not engaged with the shift select shaft 150 inside the transmission case 100, with the shift outer lever shaft 110 and moving the shift inner lever 130 to a position where it will not engage with the shift select shaft 150, iii) mounting the shift select shaft 150 in the transmission case 100 after the shift inner lever 130 has been moved, iv) and engaging the shift inner lever 130 with the shift select shaft 150 by moving the shift outer lever shaft 110 toward the outside of the transmission case 100. The manufacturing method may also include the step of positioning the shift outer lever shaft 110 with respect to the transmission case 100 after the shift inner lever 130 is engaged with the shift select shaft 150.

While some embodiments of the invention have been illustrated above, it is to be understood that the invention is not limited to details of the illustrated embodiments, but may be embodied with various changes, modifications or improvements, which may occur to those skilled in the art, without departing from the scope of the invention.

## Claims

1. A transmission (1) comprising:
a case (100);
a shift outer lever shaft (110) which is inserted into the case (100) and performs one of a shift operation or a select operation;
a shift inner lever (130) which is engaged with the shift outer lever shaft (110) in the case (100); and
a shift select shaft (150) that engages with the shift inner lever (130), the shift select shaft (150) extending in a predetermined direction,
wherein:
the shift select shaft (150) is mounted in the case (100);
movement of the shift select shaft (150) in the predetermined direction causes one of the shift operation and the select operation to be executed; and
rotation of the shift select shaft (150) around the longitudinal axis of the shift select shaft (150) causes the other of the shift operation and the select operation to be executed;
**characterized in that** the shift inner lever (130) and the shift select shaft (150) are arranged in the case (100) such that the shift inner lever (130) engages with the shift select shaft (150) by the shift inner lever (130) moving toward the outside of the case (100) from a position in which the shift inner lever (130) is not engaged with the shift select shaft (150).

2. The transmission according to claim 1, wherein the shift inner lever (130) extends in a direction that crosses the axial direction of the shift outer lever shaft (110), and the shift select shaft (150) is positioned between the case (100) and a portion of the shift inner lever (130) that faces a through-hole formed in the case (100) through which the shift outer lever shaft (110) is inserted, in the axial direction of the shift outer lever shaft (110).

3. The transmission according to claim 1, wherein the shift select shaft (150) has a groove portion (151); and a tip end portion of the inner lever engages with the groove portion (151).

4. A manufacturing method of a transmission, the method comprising:
inserting a shift outer lever shaft (110) into a case (100);
engaging an inner lever (130) in the case with the shift outer lever shaft (110);
moving the shift inner lever (130) to a position where the shift inner lever (130) will not engage with the shift select shaft (150);
mounting the shift select shaft (150) in the case (100), the shift select shaft (150) extending in a predetermined direction; and
engaging the shift inner lever (130) with the shift select shaft (150) in the case (100) by moving the shift outer lever shaft (110) toward the outside of the case (100),
the transmission (1) being arranged so that:
one of a shift operation and a select operation can be executed by movement of the shift select shaft (150) in the predetermined direction; and
the other of the shift operation and the select operation can be executed by rotation of the shift select shaft (150) around the longitudinal axis of the shift select shaft (150).

5. The manufacturing method according to claim 4, further comprising:
positioning the shift outer lever shaft (110) with respect to the case (100) after engaging the shift inner lever (130) with the shift select shaft (150).

6. The manufacturing method according to claim 5, wherein the shift inner lever (130) engages with the shift outer lever shaft (110) such that the shift inner lever (130) extends in a direction that crosses the axial direction of the shift outer lever shaft (110), and the shift select shaft (150) is mounted between the case (100) and the shift inner lever (130) in the axial direction of the shift outer lever shaft (110).

7. The manufacturing method according to claim 5, wherein the shift outer lever shaft (110) has an annular groove (119) formed around the circumference thereof; and the shift outer lever shaft (110) is positioned in the axial direction by fitting an E-ring (160) in the annular groove outside of the case (100).

## Patentansprüche

1. Getriebe (1) mit:
einem Gehäuse (100);
einer Schaltaußenhebelwelle (110), welche in das Gehäuse (100) eingeführt ist und eines von einer Schaltbetätigung oder einer Wahlbetätigung durchführt;
einem Schaltinnenhebel (130), welcher mit der Schaltaußenhebelwelle (110) in dem Gehäuse (100) im Eingriff ist; und
einer Schaltwahlwelle (150), die mit dem Schaltinnenhebel (130) in Eingriff tritt, wobei sich die Schaltwahlwelle (150) in eine vorherbestimmte Richtung erstreckt,
wobei:
die Schaltwahlwelle (150) in dem Gehäuse (100) montiert ist;
eine Bewegung der Schaltwahlwelle (150) in die vorherbestimmte Richtung bewirkt, dass eine von einer Schaltbetätigung und der Wahlbetätigung ausgeführt wird; und
eine Rotation der Schaltwahlwelle (150) um die Längsachse der Schaltwahlwelle (150) bewirkt, dass die andere von der Schaltbetätigung und der Wahlbetätigung ausgeführt wird;
**dadurch gekennzeichnet, dass** der Schaltinnenhebel (130) und die Schaltwahlwelle (150) in dem Gehäuse (100) so angeordnet sind, dass der Schaltinnenhebel (130) mit der Schaltwahlwelle (150) in Eingriff tritt, indem sich der Schaltinnenhebel (130) in Außenrichtung des Gehäuses (100) von eine Position bewegt, in welcher der Schaltinnenhebel (130) nicht mit der Schaltwahlwelle (150) im Eingriff ist.

2. Getriebe nach Anspruch 1, wobei sich der Schaltinnenhebel (130) in eine Richtung erstreckt, die die axiale Richtung der Schaltaußenhebelwelle (110) kreuzt, und die Schaltwahlwelle (150) zwischen dem Gehäuse (100) und einem Abschnitt des Schaltinnenhebels (130), der einem in dem Gehäuse (100) ausgebildeten Durchgangsloch zugewandt ist, durch welches die Schaltaußenhebelwelle (110) eingeführt ist, in der axialen Richtung der Schaltaußenhebelwelle (110) positioniert ist.

3. Getriebe nach Anspruch 1, wobei die Schaltwahlwelle (150) einen Nutabschnitt (151) hat; und ein Spitzenendabschnitt des Innenhebels mit dem Nutabschnitt (151) in Eingriff tritt.

4. Herstellungsverfahren eines Getriebes, wobei das Verfahren aufweist:
Einführen einer Schaltaußenhebelwelle (110) in ein Gehäuse (100);
In Eingriff bringen eines Innenhebels (130) in dem Gehäuse mit der Schaltaußenhebelwelle (110);
Bewegen des Schaltinnenhebels (130) zu einer Position, wo der Schaltinnenhebel (130) nicht mit der Schaltwahlwelle (150) eingreifen wird;
Montieren der Schaltwahlwelle (150) in dem Gehäuse (100), wobei die Schaltwahlwelle (150) sich in eine vorherbestimmte Richtung erstreckt; und
In Eingriff bringen des Schaltinnenhebels (130) mit der Schaltwahlwelle (150) in dem Gehäuse (100), indem die Schaltaußenhebelwelle (110) in Außenrichtung des Gehäuses (100) bewegt wird;
wobei das Getriebe (1) so angeordnet ist, dass:
eine von einer Schaltbetätigung und einer Wahlbetätigung durch Bewegen der Schaltwahlwelle (150) in die vorherbestimmte Richtung ausgeführt werden kann; und
die andere von der Schaltbetätigung und der Wahlbetätigung durch eine Rotation der Schaltwahlwelle (150) um die Längsachse der Schaltwahlwelle (150) ausgeführt werden kann.

5. Herstellungsverfahren nach Anspruch 4, ferner mit:
Positionieren der Schaltaußenhebelwelle (110) in Bezug auf das Gehäuse (100), nach in Eingriff treten des Schaltinnenhebels (130) mit der Schaltwahlwelle (150).

6. Herstellungsverfahren nach Anspruch 5, wobei der Schaltinnenhebel (130) mit der Schaltaußenhebelwelle (110) so in Eingriff tritt, dass sich der Schaltinnenhebel (130) in eine Richtung erstreckt, die die axiale Richtung der Schaltaußenhebelwelle (110) kreuzt, und die Schaltwahlwelle (150) zwischen dem Gehäuse (100) und dem Schaltinnenhebel (130) in der axialen Richtung der Schaltaußenhebelwelle (110) montiert ist.

7. Herstellungsverfahren nach Anspruch 5, wobei die Schaltaußenhebelwelle (110) eine Ringnut (119) hat, die um deren Umfang ausgebildet ist; und die Schaltaußenhebelwelle (110) in der axialen Richtung positioniert ist, indem ein E-Ring (160) in die Ringnut, außerhalb des Gehäuses, eingepasst wird.

## Revendications

1. Transmission (1) comprenant :
un carter (100) ;
un arbre de levier extérieur de changement de vitesse (110) qui est inséré dans le carter (100) et effectue une opération parmi une opération de changement de vitesse et une opération de sélection de vitesse ;
un levier intérieur de changement de vitesse (130) qui est accouplé avec l'arbre de levier extérieur de changement de vitesse (110) dans le carter (100) ; et
un arbre de changement et de sélection de vitesse (150) qui s'accouple avec le levier intérieur de changement de vitesse (130), l'arbre de changement et de sélection de vitesse (150) s'étendant dans une direction prédéterminée,
l'arbre de changement et de sélection de vitesse (150) étant monté dans le carter (100) ; un déplacement de l'arbre de changement et de sélection de vitesse (150) dans la direction prédéterminée entraînant l'exécution d'une opération parmi l'opération de changement de vitesse et l'opération de sélection de vitesse ; et
une rotation de l'arbre de changement et de sélection de vitesse (150) autour de l'axe longitudinal de l'arbre de changement et de sélection de vitesse (150) entraînant l'exécution de l'autre opération parmi l'opération de changement de vitesse et l'opération de sélection de vitesse ;
**caractérisée en ce que** le levier intérieur de changement de vitesse (130) et l'arbre de changement et de sélection de vitesse (150) sont disposés dans le carter (100) de telle sorte que le levier intérieur de changement de vitesse (130) s'accouple avec l'arbre de changement et de sélection de vitesse (150) par le biais du déplacement du levier intérieur de changement de vitesse (130) en direction de l'extérieur du carter (100) à partir d'une position dans laquelle le levier intérieur de changement de vitesse (130) n'est pas accouplé avec l'arbre de changement et de sélection de vitesse (150).

2. Transmission selon la revendication 1, dans laquelle le levier intérieur de changement de vitesse (130) s'étend dans une direction qui croise la direction axiale de l'arbre de levier extérieur de changement de vitesse (110) ; et l'arbre de changement et de sélection de vitesse (150) est positionné entre le carter (100) et une partie du levier intérieur de changement de vitesse (130) qui fait face à un trou traversant formé dans le carter (100) à travers lequel est inséré l'arbre de levier extérieur de changement de vitesse (110), dans la direction axiale de l'arbre de levier extérieur de changement de vitesse (110).

3. Transmission selon la revendication 1, dans laquelle l'arbre de changement et de sélection de vitesse (150) comporte une partie en forme de rainure (151) ; et une partie d'extrémité terminale du levier intérieur s'accouple avec la partie en forme de rainure (151).

4. Procédé de fabrication d'une transmission, le procédé comprenant :
insérer un arbre de levier extérieur de changement de vitesse (110) dans un carter (100) ;
accoupler un levier intérieur (130) dans le carter avec l'arbre de levier extérieur de changement de vitesse (110) ;
déplacer le levier intérieur de changement de vitesse (130) jusqu'à une position dans laquelle le levier intérieur de changement de vitesse (130) ne s'accouplera pas avec l'arbre de changement et de sélection de vitesse (150) ;
monter l'arbre de changement et de sélection de vitesse (150) dans le carter (100), l'arbre de changement et de sélection de vitesse (150) s'étendant dans une direction prédéterminée ; et
accoupler le levier intérieur de changement de vitesse (130) avec l'arbre de changement et de sélection de vitesse (150) dans le carter (100) en déplaçant l'arbre de levier extérieur de changement de vitesse (110) en direction de l'extérieur du carter (100) ;
la transmission (1) étant conçue de telle sorte que :
une opération parmi une opération de changement de vitesse et une opération de sélection de vitesse puisse être exécutée par le biais du déplacement de l'arbre de changement et de sélection de vitesse (150) dans la direction prédéterminée ; et
l'autre opération parmi l'opération de changement de vitesse et l'opération de sélection de vitesse puisse être exécutée par le biais de la rotation de l'arbre de changement et de sélection de vitesse (150) autour de l'axe longitudinal de l'arbre de changement et de sélection de vitesse (150).

5. Procédé de fabrication selon la revendication 4, comprenant en outre :
positionner l'arbre de levier extérieur de changement de vitesse (110) par rapport au carter (100) après l'accouplement du levier intérieur de changement de vitesse (130) avec l'arbre de changement et de sélection de vitesse (150).

6. Procédé de fabrication selon la revendication 5, dans lequel le levier intérieur de changement de vitesse (130) s'accouple avec l'arbre de levier extérieur de changement de vitesse (110) de telle sorte que le levier intérieur de changement de vitesse (130) s'étende dans une direction qui croise la direction axiale de l'arbre de levier extérieur de changement de vitesse (110) ; et l'arbre de changement et de sélection de vitesse (150) est monté entre le carter (100) et le levier intérieur de changement de vitesse (130) dans la direction axiale de l'arbre de levier extérieur de changement de vitesse (110).

7. Procédé de fabrication selon la revendication 5, dans lequel l'arbre de levier extérieur de changement de vitesse (110) comporte une rainure annulaire (119) formée autour de sa circonférence ; et l'arbre de levier extérieur de changement de vitesse (110) est positionné dans la direction axiale en ajustant un anneau de retenue de type E (160) dans la rainure annulaire à l'extérieur du carter (100).
